# EUROPEAN PATENT APPLICATION

(11) **EP 2 474 976 A2**
(43) Date of publication of application: **11.07.2012**
(21) Application number: 12150363.5
(22) Date of filing: 06.01.2012
(51) Int. Cl.: G10L 19/04, G10L 21/02

(54) **Mobile Terminal and Method for Processing Audio Data Thereof**

(30) Priority: 07.01.2011 KR 20110001760
(71) Applicant: Samsung Electronics Co., Ltd., Suwon-si, Gyeonggi-do (KR)
(72) Inventor: Kim, Seong Hwan, Gyeonggi-do (KR)
(74) Representative: Jenkins, Richard Gavin

(57) **Abstract**

A mobile terminal and audio data processing method thereof are provided The method includes preprocessing, at a control unit, audio data, sending the preprocessed audio data to an audio processing unit, decoding, at the audio processing unit, the preprocessed audio data; and outputting the decoded audio data. The method is capable of reducing power consumed when playing audio data. The method is advantageous when processing multichannel audio data and various sound effects.

## Description

### BACKGROUND OF THE INVENTION

### 1. Field of the Invention:

The present invention relates to a mobile terminal and audio data processing method. More particularly, the present invention relates to a mobile terminal and a method for processing audio data more effectively using a preprocessor.

### 2. Description of the Related Art:

With the advance of technologies, recent mobile terminals are being equipped with various functions. The mobile integrated functions include an audio playback function, a video playback function, a digital broadcast play function, etc. More particularly, the audio playback function and video playback function are the most frequently used functions by users to entertain themselves using the mobile terminal. Most of the contents played by means of the mobile terminal include audio data. Various methods can be considered for the mobile terminal to play audio data at low power.

The first approach for processing the audio data is as follows. The mobile terminal stores a predetermined amount of decoded raw audio data in a memory of the audio processing unit which outputs the audio data to the audio output unit. Next, the mobile terminal supplies power to the least number of components necessary for playback of the audio data until the buffered audio data are completely consumed. In this approach, the mobile terminal cuts the power off to other components.

The second approach for processing the audio data is as follows. The mobile terminal is provided with a Digital Signal Processor (DSP) equipped with a decoder having a codec capable of decoding audio data and stores the encoded audio data in separate small memory. The mobile terminal supplies power to the separate small memory at the lowest level until the audio data stored in the separate small memory are completely consumed while cutting the power off to other components. In this case, since the power-off state of the components which are not related to the audio data playback is maintained for a relatively long time as compared to the first approach, there is an improvement in terms of power saving.

In the first audio data processing method, the memory is limited in size so as not to store a large amount of raw data at a time. This causes a problem in that the power-off state is not maintained long enough. The second audio data processing method is advantageous in that it maintains the power-off state for a relatively long time but has a problem in that the mobile terminal should include a large number of codecs for decoding various audio data. The second audio processing method also has a drawback in that the audio data encoded with different audio codecs cannot be processed simultaneously. Since all the kinds of codecs cannot be installed in the DSP due to its limited resources, the second audio processing method cannot be applied for processing multichannel audio data and various sound effects.

There is therefore a need of a mobile terminal and method for processing audio data more effectively.

### SUMMARY OF THE INVENTION

Aspects of the present invention are to address at least the above-mentioned problems and/or disadvantages and to provide at least the advantages described below. Accordingly, an aspect of the present invention is to provide a mobile terminal and a method for processing audio data more effectively using a preprocessor.

In accordance with another aspect of the present invention, an audio data processing method of a mobile terminal is provided. The method includes preprocessing, at a control unit, audio data, sending the preprocessed audio data to an audio processing unit, decoding, at the audio processing unit, the preprocessed audio data, and outputting the decoded audio data.

In accordance with another aspect of the present invention, a mobile terminal is provided. The terminal includes a controller for preprocessing audio data and an audio processor for decoding the preprocessed audio data and for outputting the decoded audio data under the control of the controller.

Other aspects, advantages, and salient features of the invention will become apparent to those skilled in the art from the following detailed description, which, taken in conjunction with the annexed drawings, discloses exemplary embodiments of the invention.

### BRIEF DESCRIPTION OF THE DRAWINGS

The above and other aspects, features, and advantages of certain exemplary embodiments of the present invention will be more apparent from the following description taken in conjunction with the accompanying drawings, in which:

FIG. 1 is a block diagram illustrating a configuration of a mobile terminal according to an exemplary embodiment of the present invention;

FIG. 2 is a block diagram illustrating a configuration of an audio preprocessor of a mobile terminal according to an exemplary embodiment of the present invention;

FIG. 3 is a block diagram illustrating a configuration of an audio processing unit of a mobile terminal according to an exemplary embodiment of the present invention; and

FIG. 4 is a flowchart illustrating an audio data processing method of a mobile terminal according to an exemplary embodiment of the present invention.

Throughout the drawings, it should be noted that like reference numbers are used to depict the same or similar elements, features, and structures.

### DETAILED DESCRIPTION OF EXEMPLARY EMBODIMENTS

The following description with reference to the accompanying drawings is provided to assist in a comprehensive understanding of exemplary embodiments of the invention as defined by the claims and their equivalents. It includes various specific details to assist in that understanding but these are to be regarded as merely exemplary. Accordingly, those of ordinary skill in the art will recognize that various changes and modifications of the embodiments described herein can be made without departing from the scope and spirit of the invention. In addition, descriptions of well-known functions and constructions may be omitted for clarity and conciseness.

The terms and words used in the following description and claims are not limited to the bibliographical meanings, but, are merely used by the inventor to enable a clear and consistent understanding of the invention. Accordingly, it should be apparent to those skilled in the art that the following description of exemplary embodiments of the present invention is provided for illustration purpose only and not for the purpose of limiting the invention as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

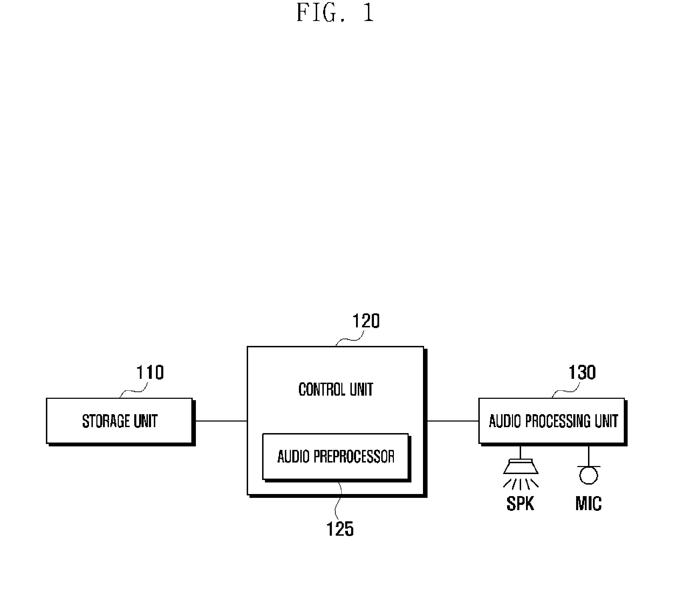

FIG. 1 is a block diagram illustrating a configuration of a mobile terminal according to an exemplary embodiment of the present invention.

Referring to FIG. 1, the mobile terminal includes a storage unit 110, a control unit 120, and an audio processing unit 130.

The storage unit 110 stores the data generated according to the operations and states of the components of the mobile terminal. The storage unit 110 also stores the audio files as the source of the audio data output. Here, the audio files include music files containing audio data to be played, video files containing audio data output along with the video data, and voice audio files containing voice data.

The control unit 120 controls overall operations of the individual components of the mobile terminal. The control unit 120 can control to play the audio data selected by the user in an audio playback mode. That is, the control unit 12 is capable of operating in the audio output mode in response to a user request. Here, the audio output mode includes the audio playback mode, video playback mode, and digital broadcast playback mode for playing the audio data contained in the audio, video, and broadcast signals. The control unit 120 can control to extract the audio data from the audio file stored in the storage unit 110 or receive the audio signal from another terminal.

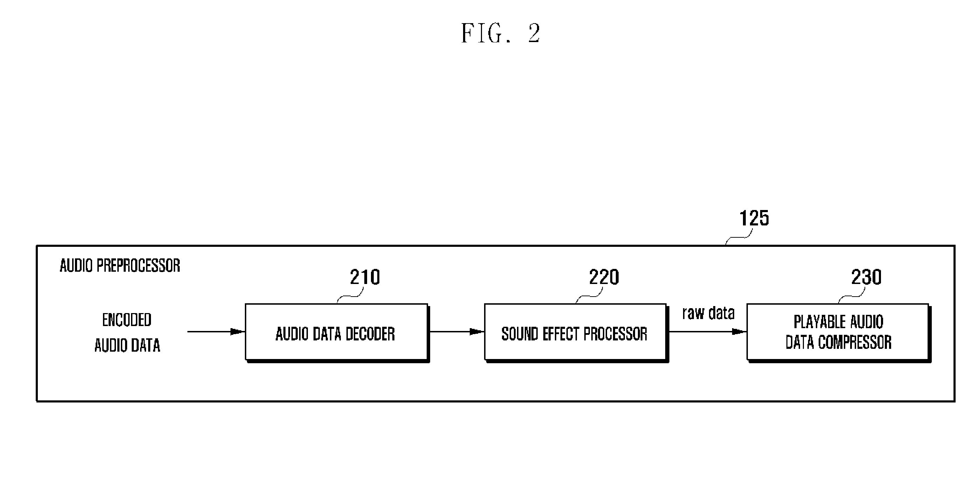

The control unit 120 preprocesses the audio data carried in the audio signal. For this purpose, the control unit 120 includes an audio preprocessor 125. The audio preprocessor 125 is described further below with reference to FIG. 2. The control unit 120 sends the preprocessed audio data to the buffer of a rendering part of the audio processing unit 130. The control unit 120 controls such that the power supply is cut off to components other than the rendering part of the audio processing unit 130 until the audio data buffered in the buffer of the rendering part are completely consumed. Once the audio data buffered in the buffer of the rendering part are completely consumed, the control unit 120 controls to supply power to the other components. The control unit 120 preprocesses the audio signal into the audio data and sends the preprocessed audio data to the audio processing unit 130 repeatedly.

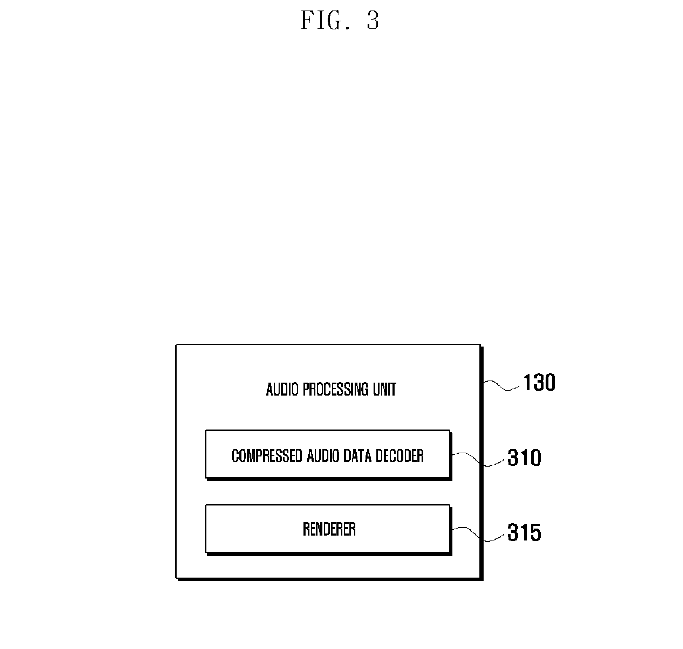

The audio processing unit 130 decodes the audio data to be output in the form of an audible sound wave through a speaker under the control of the control unit 130. For this purpose, the audio processing unit 130 includes a compressed audio data decoder and a rendering part. The audio processing unit 130 is described further below with reference to FIG. 3.

Although not depicted in FIG. 1, the mobile terminal can further include various components according to the functions of the mobile terminal. For example, the mobile terminal can include at least one of an input unit for receiving the user input for executing functions of the mobile terminal, a communication unit for transmitting/receiving voice, video, and text data, a camera unit for capturing pictures, a digital broadcast receiver unit for receiving digital broadcast data, and a short range wireless communication unit for supporting short range radio communication.

In the above-structure mobile terminal, the control unit 120 preprocesses the audio data and sends the preprocessed audio data to the audio processing unit 130. In this manner, the mobile terminal can process the audio data without storing the decoded audio data in the size constrained memory. The mobile terminal is capable of processing the audio data without all kinds of codecs in the audio processing unit 130.

FIG. 2 is a block diagram illustrating a configuration of an audio preprocessor of a mobile terminal according to an exemplary embodiment of the present invention.

Referring to FIG. 2, the control unit 120 receives the audio signal. If the audio signal is received, the control unit 120 decodes the audio signal into playable audio data by means of the audio preprocessor 125.

For this purpose, the audio preprocessor 125 includes an audio data decoder 210, a sound effect processor 220, and a playable audio data compressor 230.

The audio data decoder 210 decodes the encoded audio data into the playable audio data, that is, audio data playable by the audio processing unit 130. In more detail, the audio data decoder 210 decodes the audio signal into the audio data. The audio signal may be in one of a Moving Picture Experts Group (MPEG)-1 or MPEG-2 audio layer-3 (MP3) format, a Windows Media Audio (WMA) format, and an Advanced Audio Coding (AAC) format.

The sound effect processor 220 performs at least one sound effect on the audio data decoded by the audio data decoder 210. The at least one sound effect is responsible for recovering data loss that occurs during decoding. The audio data can be optimized to the capability of the speaker to output the audio data by the sound effect processor 220. Here, the at least one sound effect can include at least one of Trubass for controlling bass of the audio data, Sound Retrieval System (SRS) for controlling the three dimensionality of the audio data, WOW for expressing the three dimensional effect, normal, classical for reinforcing the high tones of the audio data, jazz for reinforcing bass of the audio data, rock, and FOCUS for transferring an expanded sound effect image. At this time, the audio data to which the sound effect is applied are in raw data format.

The playable audio data compressor 230 is responsible for compressing the audio data to which the at least one sound effect is applied. The audio data compression method can be a lossless encoding method or a lossy encoding method. The lossless encoding method is the method for compressing the audio data such that all bits of the original data are retained while the size of the encoded data is reduced by as much as 40%. The lossy encoding method is the method for compressing the audio data where less than all of the original data is retained. In the lossy encoding method, redundant information that is out of the range in which the human can recognize is discarded, such that the file size can be reduced as much as 5%.

The audio preprocessor 125 is provided with various codecs as compared to the audio processing unit 130 and can decode the audio signal into the audio data and compress the decoded audio data. The compressed audio data can be output through the audio processing unit 130. The audio processing unit 130 is described below with reference to FIG. 3.

FIG. 3 is a block diagram illustrating a configuration of an audio processing unit of a mobile terminal according to an exemplary embodiment of the present invention.

Referring to FIG. 3, the audio processing unit 130 includes a compressed audio data decoder 310 and a renderer 315.

The compressed audio decoder 310 is responsible for decoding the compressed audio data. The audio data can be compressed by the lossless compression method or the lossy compression method. Accordingly, the compressed audio data decoder 210 can include the codecs for decoding the audio data compressed by at least one of the lossless compression method and lossy compression method.

The renderer 315 is responsible for modeling the audio data decoded by the compressed audio data decoder 310. Here, the renderer 315 is provided with a buffer for buffering the compressed audio data. Finally, the audio processor 130 outputs the modeled audio data through the speaker.

That is, the audio processing unit 130 is provided with only the codec for decoding the compressed audio data. Through the above described procedure, the audio data can be buffered to the buffer of the renderer 315 in the compressed format. Accordingly, the mobile terminal can store a large amount of audio data in the size constrained buffer.

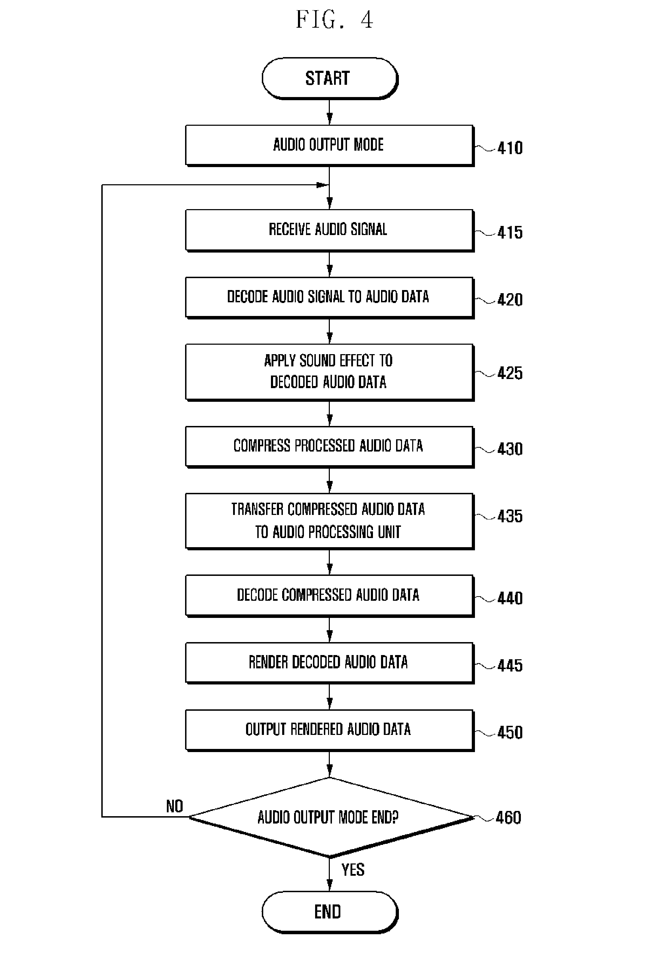

FIG. 4 is a flowchart illustrating an audio data processing method of a mobile terminal according to an exemplary embodiment of the present invention.

Referring to FIG. 4, the control unit 120 activates an audio output mode in response to a user request in step 410. Here, the audio output mode includes at least one of the audio playback mode, the video playback mode, and the digital broadcast playback mode for playing the audio data contained in the audio, video, and broadcast signals.

The control unit 120 receives an audio signal selected by the user in step 415. Next, the control unit decodes the received audio signal into audio data by means of the audio preprocessor 125 in step 420. The audio signal can be decoded into the audio data. The audio signal may be in the MP3 format, the WMA format, and the AAC format.

The control unit 120 applies at least one sound effect to the decoded audio data decoded by the audio preprocessor 125 to compensate for loss that occurs during the decoding process in step 425. The control unit 120 can optimize the audio data according to the capability of the speaker by means of the audio preprocessor 125. Here, the at least one sound effect can include at least one of a Trubass for controlling bass of the audio data, SRS for controlling the three dimensionality of the audio data, WOW for expressing the three dimensional effect, normal, classical for reinforcing the high tones of the audio data, jazz for reinforcing bass of the audio data, rock, and FOCUS for transferring an expanded sound effect image.

Next, the control unit 120 compresses the audio data processed by the audio preprocessor 125 in step 430. At this time, the audio data can be compressed by using the lossless encoding method or the lossy encoding method. The lossless encoding method is the method for compressing the audio data such that all bits of the original data are retained while the size of the encoded data is reducing by as much as 40%. The lossy encoding method is the method for compressing the audio data where less than all of the original data is retained. In the lossy encoding method, redundant information that is out of the range in which the human can recognize is discarded, such that the file size can be reduced as much as 5%.

The control unit 120 sends the compressed audio data to the audio processing unit 130 in step 435. Next, the control unit 120 controls the audio processing unit 130 to decode the compressed audio data in step 440. The audio processing unit 130 is provided with the codec for at least one of the lossless encoding and the lossy encoding.

The control unit 120 controls the audio processing unit 130 to render the decoded audio data in step 445. Next, the control unit 120 controls such that the rendered audio data is output through the speaker in step 450. Afterward, the control unit 120 determines whether an audio output mode termination request is input in step 460. The control unit 120 repeats the procedure in steps 415 through 460 repeatedly until the audio output mode termination request is detected in step 460. Although not depicted in FIG. 4, the control unit 120 can control to cut the power supplied to components other than the audio preprocessor 125 and the audio processing unit 130, which are the least number of parts used for processing the audio data.

As described above, the audio data processing method of exemplary embodiments of the present invention is capable of reducing power consumed when playing audio data.

Also, the audio data processing method of a mobile terminal according to exemplary embodiments of the present invention is advantageous to process multichannel audio data and various sound effects.

While the invention has been shown and described in reference to certain exemplary embodiments thereof, it will be understood by those skilled in the art that various changes in form and details may be made therein without departing from the spirit and scope of the invention as defined by the appended claims and their equivalents.

## Claims

1. An audio data processing method of a mobile terminal, the method comprising:
preprocessing, at a control unit, audio data;
sending the preprocessed audio data to an audio processing unit;
decoding, at the audio processing unit, the preprocessed audio data; and
outputting the decoded audio data.

2. The method of claim 1, wherein the preprocessing comprises:
decoding an input audio signal into the audio data; and
compressing the decoded audio data into a playable audio format.

3. The method of claim 2, wherein the input audio signal may be in one of a Moving Picture Experts Group (MPEG)-1 or MPEG-2 audio layer-3 (MP3) format, a Windows Media Audio (WMA) format, and an Advanced Audio Coding (AAC) format.

4. The method of claim 2, wherein the compressing comprises applying at least one sound effect to the decoded audio data to recovering loss that occurs during decoding.

5. The method of claim 4, wherein sound effect includes at least one of a Trubass for controlling bass of the audio data, Sound Retrieval System (SRS) for controlling three dimensionality of the audio data, WOW for expressing the three dimensional effect, normal, classical for reinforcing high tones of the audio data, jazz for reinforcing bass of the audio data, rock, and FOCUS for transferring an expanded sound effect image.

6. The method of claim 2, wherein the compressing comprises selecting one of a lossless compression algorithm and a lossy compression algorithm to compress the decoded audio data.

7. A mobile terminal comprising:
a controller for preprocessing audio data; and
an audio processor for decoding the preprocessed audio data and for outputting the decoded audio data under the control of the controller.

8. The mobile terminal of claim 7, wherein the controller comprises an audio preprocessor for decoding an input audio signal into the audio data and for compressing the decoded audio data into a playable audio format.

9. The mobile terminal of claim 8, wherein the input audio signal may be in one of a Moving Picture Experts Group (MPEG)-1 or MPEG-2 audio layer-3 (MP3) format, a Windows Media Audio (WMA) format, and an Advanced Audio Coding (AAC) format.

10. The mobile terminal of claim 8, wherein the audio preprocessor applies at least one sound effect to the decoded audio data to recovering loss that occurs during decoding.

11. The mobile terminal of claim 10, wherein sound effect includes at least one of a Trubass for controlling bass of the audio data, Sound Retrieval System (SRS) for controlling three dimensionality of the audio data, WOW for expressing the three dimensional effect, normal, classical for reinforcing high tones of the audio data, jazz for reinforcing bass of the audio data, rock, and FOCUS for transferring an expanded sound effect image.

12. The mobile terminal of claim 8, wherein the audio is compressed by one of a lossless compression algorithm and a lossy compression algorithm.
